# EUROPEAN PATENT APPLICATION

(11) **EP 4 575 992 A1**
(43) Date of publication of application: **25.06.2025**
(21) Application number: 24195701.8
(22) Date of filing: 21.08.2024
(51) Int. Cl.: G06T 7/277, G06T 7/246

(54) **COMPUTER-READABLE STORAGE MEDIUM, OBJECT TRACKING DEVICE, AND OBJECT TRACKING METHOD**

(30) Priority: 19.12.2023 JP 2023214205
(71) Applicant: Kabushiki Kaisha Toshiba, Tokyo 105-0023 (JP)
(72) Inventor: TONOUCHI, Yojiro, Tokyo, 105-0023 (JP)
(74) Representative: Marks & Clerk LLP

(57) **Abstract**

According to one arrangement, a computer-readable storage medium storing a program for causing a computer to execute processes. The processes include acquiring (ST110) image data at a first time, detecting (ST120) a position and a kind of an object from the image data, thereby generating an object detection result, selecting (ST130) a prediction model for predicting a position of the object, based on an object tracking result at a second time, predicting (ST140) a position of the object at the first time, based on the selected prediction model and a time-series continuous tracking result, thereby generating a position prediction result at the first time, generating (ST150) a correlation result by executing correlation between the object detection result and the position prediction result, and generating (ST160) an object tracking result at the first time, based on the correlation result.

## Description

### FIELD

The present disclosure relates to a computer-readable storage medium, an object tracking device, and an object tracking method.

### BACKGROUND

Conventionally, there is known an object tracking device that tracks an object in a photographed moving image. The object tracking device tracks an object, for example, by detecting the object at each time from the moving image, and correlating the identical objects by evaluating an overlap between temporally sequential object detection results (for example, rectangular areas each substantially including the object).

For example, in a case where a moving object that is a tracking target is hidden by another object (i.e., in a case where occlusion occurs), the above-described object tracking device cannot detect the object of the tracking target, and there is a case where the tracking of the object is interrupted. To cope with this, there is a method in which while the object cannot be detected, a position of a destination of movement is linearly predicted from a movement locus thus far, and tracking is continued by using a predicted position instead of a detected position. For example, since an error (prediction error) between an actual detected position and a predicted position is small in regard to an object, such as a vehicle or a walking person, which moves at a fixed velocity, this method is relatively effective if the time of non-detection is within a predetermined time.

However, there is a case where the tracking accuracy of the object by the above method deteriorates, since the prediction error cumulatively increases due to an increase in length of time of non-detection. For example, in a case where an object of a tracking target that is at rest is hidden by another moving object, there may occur a case where a predicted position deviates due to a prediction error, despite the object of the tracking target not moving during the time of non-detection. Thus, there is a demand for technology that improves the tracking accuracy of an object, while taking into accounts the influence of a prediction error.

### BRIEF DESCRIPTION OF THE DRAWINGS

FIG. 1 is a block diagram exemplarily illustrating a configuration of an object tracking system including an object tracking device according to a first arrangement.
FIG. 2 is a block diagram exemplarily illustrating a configuration of the object tracking device according to the first arrangement.
FIG. 3 is an explanatory view illustrating an example of practical use of the object tracking device according to the first arrangement.
FIG. 4 is a flowchart illustrating an operation example of the object tracking device according to the first arrangement.
FIG. 5 is a diagram exemplarily illustrating image data at time t in the first arrangement.
FIG. 6 is an explanatory view relating to object detection at time t in the first arrangement.
FIG. 7 is a table exemplarily illustrating an object detection result at time t in the first arrangement.
FIG. 8 is an explanatory diagram relating to an object determined position at time t-1 in the first arrangement.
FIG. 9 is a table exemplarily illustrating an object tracking result at time t-1 in the first arrangement.
FIG. 10 is a table exemplarily illustrating a model database in the first arrangement.
FIG. 11 is an explanatory diagram relating to a movement locus at time t-1 in the first arrangement.
FIG. 12 is a table exemplarily illustrating a position prediction result at time t in the first arrangement.
FIG. 13 is a flowchart illustrating a concrete example of a correlating process in FIG. 4.
FIG. 14 is an explanatory diagram relating to an IoU (Intersection over Union) in the first arrangement.
FIG. 15 is a table exemplarily illustrating information of combinations of correlated positions in the first arrangement.
FIG. 16 is a flowchart illustrating a concrete example of a continuous tracking result generating process in FIG. 4.
FIG. 17 is a table exemplarily illustrating an object tracking result at time t in the first arrangement.
FIG. 18 is a table exemplarily illustrating a model database in a second arrangement.
FIG. 19 is an explanatory diagram exemplarily illustrating a scene in which a person approaches a transportation object in the second arrangement.
FIG. 20 is a block diagram exemplarily illustrating a hardware configuration of a computer according to an arrangement.

### DETAILED DESCRIPTION

According to one arrangement, a computer-readable storage medium storing a program for causing a computer to execute processes. The processes include acquiring image data at a first time, detecting a position and a kind of an object from the image data at the first time, thereby generating an object detection result at the first time in which the detected position and the detected kind of the object are correlated, selecting a prediction model for predicting a position of the object at the first time, based on an object tracking result at a second time that precedes the first time, a position and a kind of the object determined at the second time being correlated in the object tracking result at the second time, predicting a position of the object at the first time, based on the selected prediction model and a time-series continuous tracking result including the object tracking result at the second time, thereby generating a position prediction result at the first time in which the predicted position and the kind of the object are correlated, generating a correlation result by executing correlation between the object detection result at the first time and the position prediction result at the first time, and generating an object tracking result at the first time, based on the correlation result.

Hereinafter, arrangements of an object tracking device are described in detail with reference to the accompanying drawings.

### (First Arrangement)

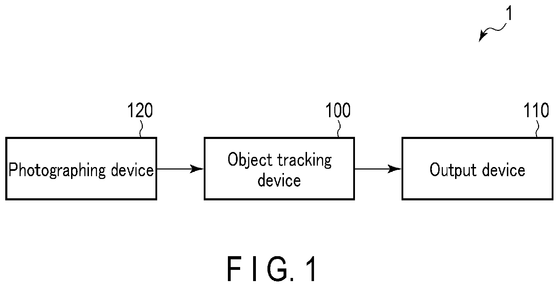

FIG. 1 is a block diagram exemplarily illustrating a configuration of an object tracking system 1 including an object tracking device 100 according to a first arrangement. The object tracking system 1 includes the object tracking device 100, an output device 110, and a photographing device 120. The photographing device 120 photographs, for example, a site of manufacture. The object tracking device 100 tracks, for example, a product that is being manufactured, and a worker, by using a photographed moving image of the site of manufacture. The output device 110 displays display data including information relating to the tracked objects (the product and worker).

The output device 110 is, for example, a monitor. The output device 110 receives display data from the object tracking device 100. The output device 110 displays the display data. Note that the output device 110 is not limited to the monitor if the output device 110 can display the display data. For example, the output device 110 may be a projector. Besides, the output device 110 may include a speaker.

The photographing device 120 is, for example, an image sensor. The photographing device 120 photographs a predetermined area (for example, a site of manufacture), and acquires a moving image. In the present arrangement, the data of the moving image acquired by the photographing device 120 is referred to as "image data". In other words, the photographing device 120 acquires time-series image data. The photographing device 120 outputs the acquired image data to the object tracking device 100.

Note that in the arrangements to be described below, as a concrete example, it is assumed that a moving image from the start of photography to the present time is photographed at each time (1, 2,..., t). In addition, the present time is described as being t.

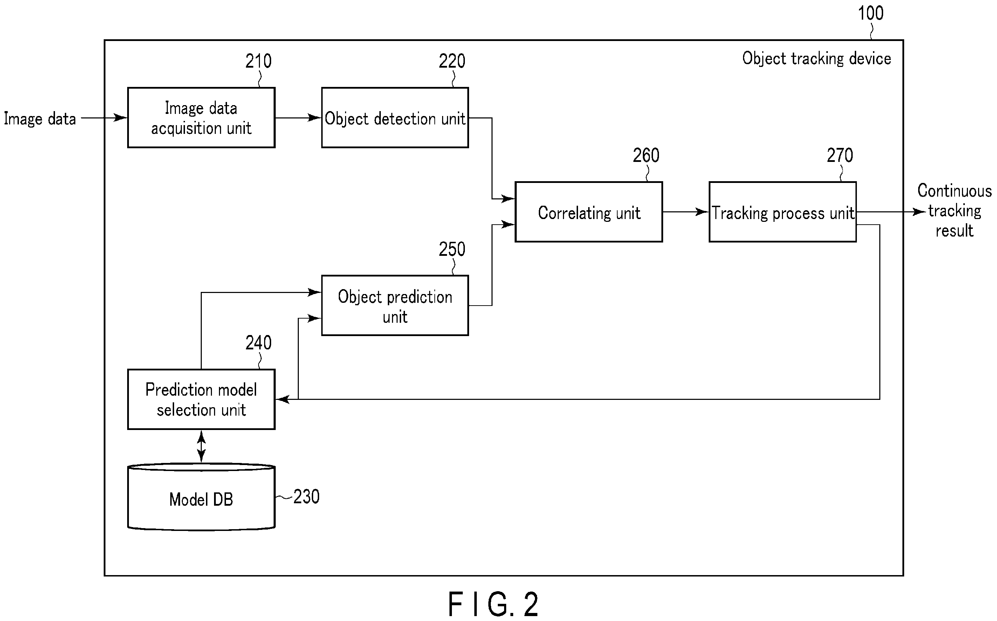

FIG. 2 is a block diagram exemplarily illustrating a configuration of the object tracking device 100 according to the first arrangement. The object tracking device 100 includes an image data acquisition unit 210 (image data acquisition means), an object detection unit 220 (object detection means), a model DB 230, a prediction model selection unit 240 (prediction model selection means), an object prediction unit 250 (object prediction means), a correlating unit 260 (correlating means), and a tracking process unit 270 (tracking process means).

Note that the object tracking device 100 may include a memory and a processor, which are not illustrated. The memory stores, for example, various programs (e.g., an object tracking program for tracking an object) relating to the operation of the object tracking device 100. The processor implements functions as the image data acquisition means, object detection means, prediction model selection means, object prediction means, correlating means, and tracking process means, by executing the various programs stored in the memory.

The image data acquisition unit 210 acquires image data at the present time from the photographing device 120. The image data acquisition unit 210 outputs the image data at the present time to the object detection unit 220. Note that the image data may be correlated with a time of photography.

The image data at the present time may mean real-time image data, or image data, the time of acquisition of which is the present. Although the same applies to the description below, it should be note that the above two meanings are not mixedly used in serial processes in the object tracking device 100. Thus, in concrete examples to be described below, it is assumed that the image data of the present time means the real-time image data.

The object detection unit 220 receives the image data at the present time from the image data acquisition unit 210. The object detection unit 220 detects the position and kind of an object from the image data at the present time. The object detection unit 220 generates an object detection result at the present time that is a detection result of the object, in which the detected position and kind of the object at the present time are correlated. The object detection unit 220 outputs the object detection result at the present time to the correlating unit 260.

The position of the object is expressed by, for example, a rectangular area that substantially includes the object in the image data. The rectangular area may be referred to as "bounding box". In addition, the detected position of the object in the object detection unit 220 may be referred to as "object detection position". In short, the object detection result includes the object detection position.

Note that, for the detection of the position of the object in the object detection unit 220, use may be made of, for example, a method described in reference document 1 (Ren, Shaoqing, Kaiming He, Ross Girshick, and Jian Sun. "Faster R-CNN: Towards Real-Time Object Detection with Region Proposal Networks." Advances in Neural Information Processing Systems. Vol. 28, 2015.), or the like.

The model DB 230 stores the kind of an object, a location where the object is present (for example, a location where a transportation object is disposed, and a location where a person is working), and a prediction model, in such a manner that these are correlated. The model DB 230 outputs information of a prediction model that is correlated with the kind and location of the object, in response to readout from the prediction model selection unit 240. Note that the model DB 230 may store a table in which the kind of object, the location, and the prediction model are correlated. In addition, the information of the prediction model may be information indicating that prediction with use of the prediction model is not executed.

As regards the information of the location where the object is present, for example, it is assumed that an area relating to a predetermined location (for example, a passageway and a transportation object storage place) is detected from a moving image and set in advance. For example, in a case where only an area of the transportation object storage place is detected, an area excluding the area of the transportation object storage place may be set as an area of the passageway. As regards the prediction model, for example, prediction using a Kalman filter, which is a kind of linear prediction, is known.

The prediction model selection unit 240 acquires an object tracking result at one preceding time to the present time from the tracking process unit 270. Based on the object tracking result at the one preceding time, the prediction model selection unit 240 selects a prediction model from the model DB 230. The prediction model selection unit 240 outputs information of the selected prediction model to the object prediction unit 250.

The one preceding time to the present time is, for example, time t-1 in relation to the present time t. The interval of times is, for example, a frame interval of a moving image. In the object tracking result, a determined position of an object (object determined position) and the kind of the object are correlated.

The object prediction unit 250 receives the information of the prediction model from the prediction model selection unit 240, and receives the continuous tracking result at the one preceding time from the tracking process unit 270. The object prediction unit 250 predicts the position of the object at the present time, based on the information of the prediction model and the object tracking result at the one preceding time (or object determined position) included in the continuous tracking result at the one preceding time. The object prediction unit 250 generates a position prediction result at the present time that is a prediction result of the object, in which the predicted position of the object at the present time and the kind of the object are correlated. The object prediction unit 250 outputs the position prediction result at the present time to the correlating unit 260. Note that the predicted position of the object in the object prediction unit 250 may also be referred to as "object prediction position". Specifically, the position prediction result includes the object prediction position. In addition, in a case where the information of the prediction model is the information indicating that prediction is not executed, the object prediction unit 250 does not predict the position of the object at the present time, and may determine the object tracking result at the one preceding time as the position prediction result at the present time.

The continuous tracking result is a tracking result in which object tracking results are accumulated in a time-series manner from a tracking start time to a certain time (for example, one preceding time and the present time), in regard to identical objects correlated with an intervening time therebetween. For example, a continuous tracking result at one preceding time (continuous tracking result at time t-1) includes object tracking results from an object tracking result at a tracking start time (object tracking result at time 1) to an object tracking result at the one preceding time (object tracking result at time t-1). In addition, for example, a continuous tracking result at the present time (continuous tracking result at time t) includes object tracking results from an object tracking result at the tracking start time (object tracking result at time 1) to an object tracking result at the present time (object tracking result at time t).

Note that, for the prediction of the position of the object in the object prediction unit 250, if the Kalman filter is used as the prediction model, use may be made of, for example, a method described in reference document 2 (Alex Bewley, Zongyuan Ge, Lionel Ott, Fabio Ramos, and Ben Upcroft. Simple online and realtime tracking. In 2016 IEEE international conference on image processing (ICIP), pages 3464-3468. IEEE, 2016).

The correlating unit 260 receives the object detection result at the present time from the object detection unit 220, and receives the position prediction result at the present time from the object prediction unit 250. The correlating unit 260 executes a correlating process between the object detection result at the present time and the position prediction result at the present time with respect to each of all object positions (object detection positions and object prediction positions). The correlating unit 260 generates a correlation result at the present time, including the information of combinations of correlated positions and the information of uncorrelated positions. The correlating unit 260 outputs the correlation result at the present time to the tracking process unit 270.

The correlating process calculates an evaluation value by, for example, evaluating an overlap between the rectangular area that is the object detection position, and the rectangular area that is the object prediction area, and executes allocation between the object detection position and the object prediction position by using the evaluation value. For the evaluation of the overlap, for example, use may be made of an IoU (Intersection over Union), or a similarity of image features (external appearance features of objects) within the rectangular area, or both of these. For example, the Hungarian algorithm may be used for the allocation method.

The information of the combination of correlated positions is information of a combination between the object detection result and the position prediction result. The information of the uncorrelated position is information of an object detection result or information of a position prediction result, in regard to which a combination for correlation is absent.

The tracking process unit 270 receives the correlation result at the present time from the correlating unit 260. The tracking process unit 270 generates a continuous tracking result at the present time in regard to all object positions, based on the correlation result at the present time. Specifically, the tracking process unit 270 generates object tracking results at the present time in regard to all object positions, and generates a continuous tracking result at the present time by adding the object tracking results at the present time to the continuous tracking result at the one preceding time. The tracking process unit 270 outputs the continuous tracking result at the present time to the output device 110. Note that before the correlating unit 260 executes the correlating process relating to the image data at the present time, the tracking process unit 270 outputs the object tracking result at the one preceding time to the prediction model selection unit 240, and outputs the continuous tracking result at the one preceding time to the object prediction unit 250.

The configuration of the object tracking system 1 including the object tracking device 100 according to the first arrangement, and the configuration of the object tracking device 100, have been described above. Next, an example of practical use of the object tracking device 100, and an operation example of the object tracking device 100, are described.

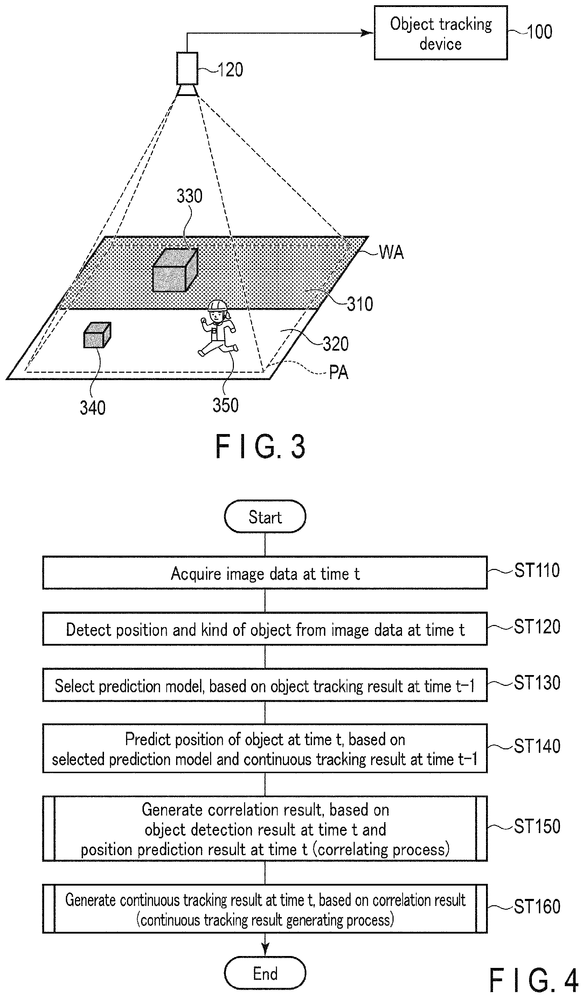

FIG. 3 is an explanatory view illustrating an example of practical use of the object tracking device 100 according to the first arrangement. FIG. 3 illustrates the object tracking device 100, a working area WA on the site of manufacture, two transportation objects 330 and 340 disposed on the working area WA, a worker 350 working on the working area WA, and the photographing device 120 that photographs the working area WA.

The working area WA of FIG. 3 includes a transportation object storage place 310 for temporary placement of a transportation object, and a passageway 320. The transportation object storage place 310 and passageway 320 have, for example, different floor colors. The transportation object 330 is disposed on the transportation object storage place 310, and the transportation object 340 is disposed on the passageway 320. In addition, the worker 350 is working on the passageway 320.

The photographing device 120 outputs image data relating to a photography area PA, which substantially includes the working area WA, to the object tracking device 100. The photography area PA includes the two transportation objects 330 and 340 and the worker 350. In other words, the image data includes the two transportation objects 330 and 340 and the worker 350.

In a concrete example below, as illustrated in FIG. 3, a description is given of a case of tracking the two transportation objects 330 and 340 and the worker 350 included in the image data acquired from the photographing device 120.

FIG. 4 is a flowchart illustrating an operation example of the object tracking device 100 according to the first arrangement. The process of the flowchart of FIG. 4 starts, for example, by an object tracking program being executed by a user that supervises the site of manufacture. In a concrete example below, a description is given of a case of processing image data at time t, after the execution of a process relating to image data at time t-1 by the object tracking program.

### (Step ST110)

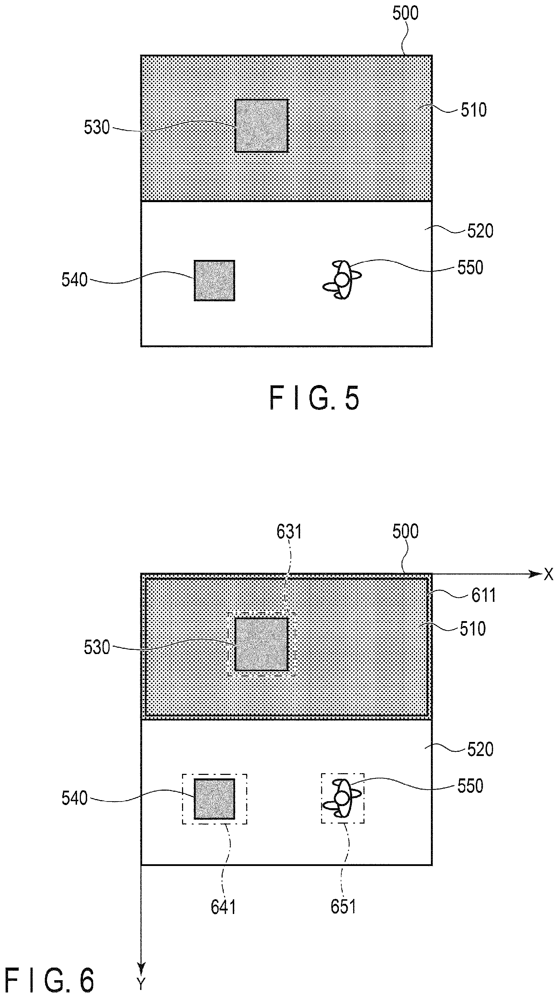

The image data acquisition unit 210 acquires image data at time t. Hereinafter, an example of image data at time t is described with reference to FIG. 5.

FIG. 5 is a diagram exemplarily illustrating image data 500 at time t in the first arrangement. In the image data 500 at time t, a scene is illustrated in which a transportation object 530 is disposed on a transportation object storage place 510, a transportation object 540 is disposed on a passageway 520, and a person 550 is working on the passageway 520.

### (Step ST120)

After the image data at time t is acquired, the object detection unit 220 detects the position and kind of the object from the image data at time t. Hereinafter, object detection at time t is described with reference to FIG. 6.

FIG. 6 is an explanatory view relating to object detection at time t in the first arrangement. FIG. 6 illustrates, on the image data 500 at time t, a transportation object storage place area 611 and three object detection positions 631, 641 and 651. Note that in the image data 500 at time t, an upper left corner is defined as an origin, a right direction from the origin is defined as an X axis, and a downward direction from the origin is defined as a Y axis. The same applies to the description below.

The object detection unit 220 generates an object detection result at time t by detecting the position and kind of the object from the image data 500 at time t. The object detection result at time t includes, for example, the three object detection positions 631, 641 and 651. The object detection position 631 is a rectangular area substantially including the transportation object 530. The object detection position 641 is a rectangular area substantially including the transportation object 540. The object detection position 651 is a rectangular area substantially including the person 550.

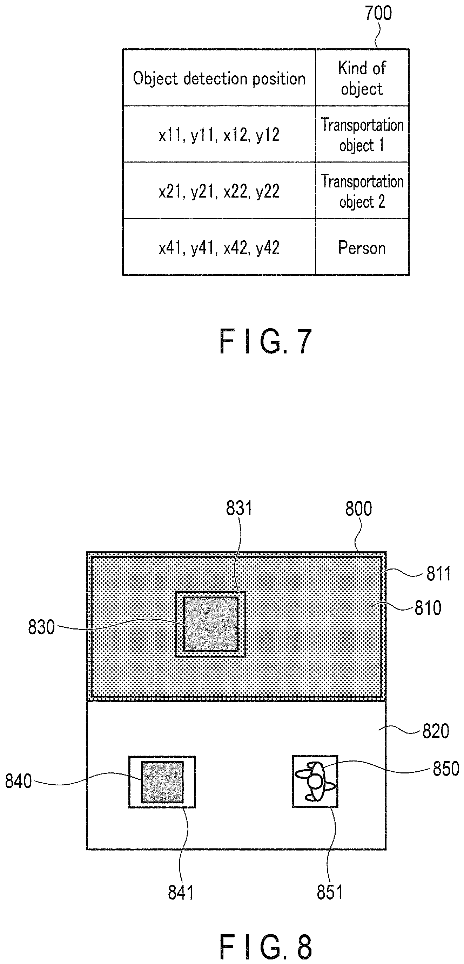

The object detection result at time t can be expressed by, for example, D(t) = (d(t), c), in regard to each of detected objects. The "d(t)" represents an object detection position (rectangular area) at time t. The object detection position is expressed by, for example, "x1, y1, x2, y2". Here, a combination of "x1, y1" indicates upper left coordinates of the rectangular area, and a combination of "x2, y2" indicates lower right coordinates of the rectangular area. This method of expressing the rectangular area similarly applies to the description below. The "c" represents the kind of object. The kind of object is, for example, a transportation object and a person. The object detection unit 220 outputs the object detection result, D(t) = (d(t), c), in regard to each of objects detected at time t. Hereinafter, the object detection result at time t is described with reference to FIG. 7.

FIG. 7 is a table 700 exemplarily illustrating the object detection result at time t in the first arrangement. The table 700 correlates the object detection position and the kind of object. Specifically, in the table 700, an object detection position "x11, y11, x12, y12" and the kind of object "transportation object 1" are correlated. In addition, an object detection position "x21, y21, x22, y22" and the kind of object "transportation object 2" are correlated. Furthermore, an object detection position "x41, y41, x42, y42" and the kind of object "person" are correlated. Note that in the object detection result at time t, the transportation object 1 corresponds to the transportation object 530, and the transportation object 2 corresponds to the transportation object 540.

Note that the object detection unit 220 may detect the transportation object storage place area 611 from the image data 500 at time t.

### (Step ST130)

After the position and kind of the object are detected from the image data at time t, the prediction model selection unit 240 selects a prediction model, based on the object tracking result at time t-1. Specifically, based on the object tracking result at time t-1, the prediction model selection unit 240 selects a prediction model for predicting the position of the object at time t from the model database. Hereinafter, referring to FIG. 8, FIG. 9 and FIG. 10, a description is given of the object determined position included in the object tracking result at time t-1, the object tracking result at time t-1, and the model database.

FIG. 8 is an explanatory diagram relating to the object determined position at time t-1 in the first arrangement. FIG. 8 illustrates image data 800 at time t-1. In the image data 800 at time t-1, a scene is illustrated in which a transportation object 830 is disposed on a transportation object storage place 810, a transportation object 840 is disposed on a passageway 820, and a person 850 is working on the passageway 820. In addition, FIG. 8 illustrates, on the image data 800 at time t-1, a transportation object storage place area 811 and three object detection positions 831, 841 and 851.

The object detection result at time t-1 includes, for example, the three object detection positions 831, 841 and 851. The object detection position 831 is a rectangular area substantially including the transportation object 830. The object detection position 841 is a rectangular area substantially including the transportation object 840. The object detection position 851 is a rectangular area substantially including the person 850.

The object tracking result at time t-1 can be expressed by, for example, T(t-1) = (s(t-1), c), in regard to each of objects whose positions are determined. The "s(t-1)" represents an object determined position (rectangular area) at time t-1.

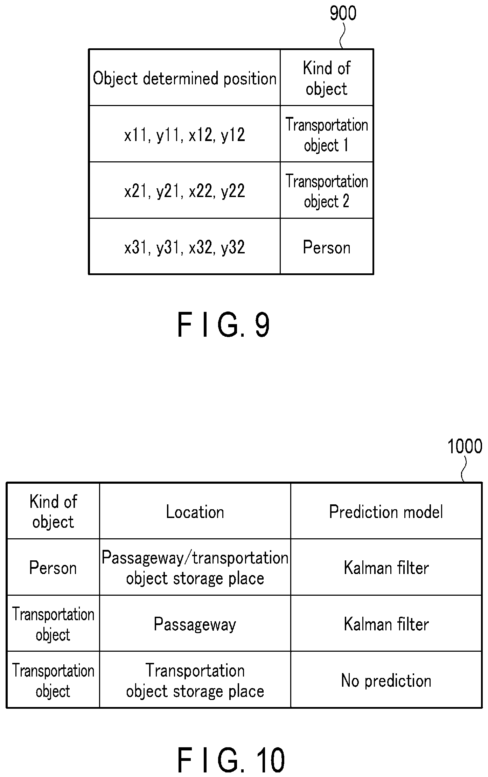

FIG. 9 is a table 900 exemplarily illustrating the object tracking result at time t-1 in the first arrangement. The table 900 correlates the object determined position and the kind of object. Specifically, in the table 900, an object determined position "x11, y11, x12, y12" and the kind of object "transportation object 1" are correlated. In addition, an object determined position "x21, y21, x22, y22" and the kind of object "transportation object 2" are correlated. Furthermore, an object determined position "x31, y31, x32, y32" and the kind of object "person" are correlated. Note that in the object tracking result at time t-1, the transportation object 1 corresponds to the transportation object 830, and the transportation object 2 corresponds to the transportation object 840.

FIG. 10 is a table 1000 exemplarily illustrating a model database in the first arrangement. In the table 1000, the kind of object, location and prediction model are correlated. Specifically, in the table 1000, the kind of object "person", location "passageway/transportation object storage place", and prediction model "Kalman filter" are correlated. In addition, the kind of object "transportation object", location "passageway", and prediction model "Kalman filter" are correlated. Furthermore, the kind of object "transportation object", location "transportation object storage place", and prediction model "no prediction" are correlated.

Note that it is assumed that the kind of object "transportation object" does not indicate a specific transportation object, but corresponds to both of the above-described transportation object 1 and transportation object 2. Besides, the location "passageway/transportation object storage place" includes both of the passageway and the transportation object storage place.

For example, based on the object tracking result at time t-1 (table 900), the prediction model selection unit 240 selects a prediction model from the model database (table 1000). If attention is paid to the kind of object "transportation object 1", the prediction model selection unit 240 specifies that the kind of object "transportation object 1" is disposed at the location "transportation object storage place", based on the object determined position "x11, y11, x12, y12", and selects the prediction model "no prediction". In addition, if attention is paid to the kind of object "transportation object 2", the prediction model selection unit 240 specifies that the kind of object "transportation object 2" is disposed at the location "passageway", based on the object determined position "x21, y21, x22, y22", and selects the prediction model "Kalman filter". Furthermore, if attention is paid to the kind of object "person", the prediction model selection unit 240 specifies that the kind of object "person" is working on the location "passageway", based on the object determined position "x31, y31, x32, y32", and selects the prediction model "Kalman filter".

### (Step ST140)

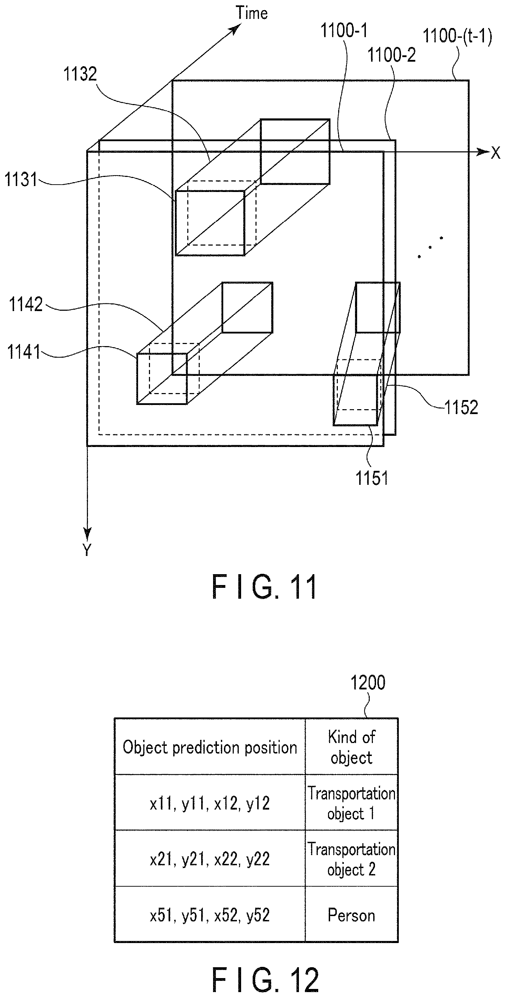

After the prediction model is selected, the object prediction unit 250 predicts the position of the object at time t, based on the selected prediction model and the continuous tracking result at time t-1. Hereinafter, the continuous tracking result at time t-1 is described with reference to FIG. 11.

FIG. 11 is an explanatory diagram relating to a movement locus at time t-1 in the first arrangement. FIG. 11 illustrates object tracking results from an object tracking result 1100-1 at time 1 to an object tracking result 1100-(t-1) at time t-1, which are accumulated in time series in a time axis direction perpendicular to the X axis and Y axis. The object tracking result 1100-1 at time 1 includes three object determined positions 1131, 1141 and 1151. The object determined position 1131 corresponds to the transportation object 1, the object determined position 1141 corresponds to the transportation object 2, and the object determined position 1151 corresponds to the person. Note that the movement locus may be called "tracklet".

In addition, FIG. 11 illustrates three movement loci 1132, 1142 and 1152. The movement locus 1132 is a time-series accumulation of object determined positions from the object tracking result 1100-1 at time 1 to the object tracking result 1100-(t-1) at time t-1, the start point of the movement locus 1132 being the object determined position 1131. Similarly, the start point of the movement locus 1142 is the object determined position 1141, and the start point of the movement locus 1152 is the object determined position 1151.

The movement locus at time t-1 can be expressed as, for example, an array {s(1),..., s(t-1)}, in which object determined positions at respective times are accumulated in time series in regard to each of the objects. In addition, the continuous tracking result at time t-1 can be expressed as CT(t-1) = ({s(1),..., s(t-1)}, c) in regard to each of the objects.

For example, if attention is paid to the transportation object 1, since the prediction model is "no prediction", the object prediction unit 250 determines the object determined position at time t-1 as the object prediction positon at time t, and generates the position prediction result at time t. In addition, if attention is paid to the transportation object 2, the object prediction unit 250 predicts the object prediction positon at time t, based on the prediction model "Kalman filter" and the continuous tracking result at time t-1 (this includes the movement locus 1142), and generates the position prediction result at time t. Furthermore, if attention is paid to the person, the object prediction unit 250 predicts the object prediction positon at time t, based on the prediction model "Kalman filter" and the continuous tracking result at time t-1 (this includes the movement locus 1152), and generates the position prediction result at time t.

The position prediction result at time t can be expressed as, for example, P(t) = (p(t), c), in regard to each of the objects. The "p(t)" represents the object prediction position (rectangular area) at time t. Hereinafter, the position prediction result at time t is described with reference to FIG. 12.

FIG. 12 is a table 1200 exemplarily illustrating the position prediction result at time t in the first arrangement. In the table 1200, the object prediction position and the kind of object are correlated. Specifically, in the table 1200, an object prediction position "x11, y11, x12, y12" and the kind of object "transportation object 1" are correlated. In addition, an object prediction position "x21, y21, x22, y22" and the kind of object "transportation object 2" are correlated. Furthermore, an object prediction position "x51, y51, x52, y52" and the kind of object "person" are correlated.

As regards the transportation object 1, since prediction by the prediction model is not executed in the object prediction unit 250, the object prediction position at time t is the same as the object determined position at t-1. In addition, as regards the transportation object 2, although prediction by the prediction model is executed in the object prediction unit 250, the transportation object 2 is not moved (i.e., is at rest), and thus the object prediction position at time t does not change from the object determined position at t-1.

### (Step ST150)

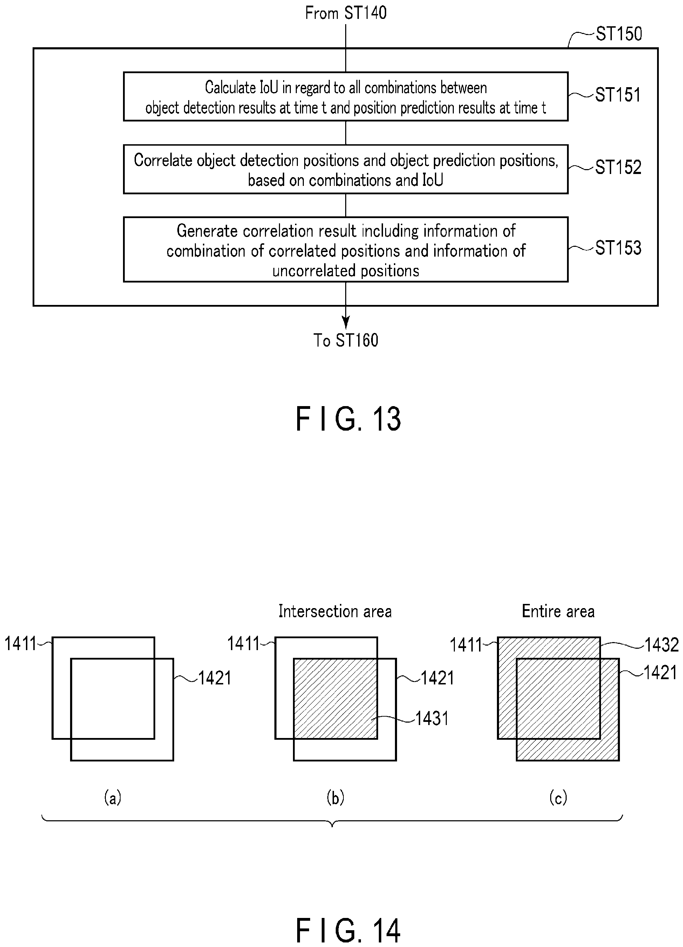

After the position of the object at time t is predicted, the correlating unit 260 generates a correlation result, based on the object detection result at time t and the position prediction result at time t. Hereinafter, the process of step ST150 is referred to as "correlating process". A concrete example of the correlating process is described below with reference to a flowchart of FIG. 13.

FIG. 13 is a flowchart illustrating a concrete example of the correlating process in FIG. 4. The flowchart of FIG. 13 is a flowchart for describing the details of the process of step ST150 in FIG. 4.

### (Step ST151)

After the positions of the objects at time t are predicted, the correlating unit 260 calculates the IoU in regard to all combinations between the object detection results at time t and the position prediction results at time t.

The object detection results at time t with respect to all objects can be expressed by, for example, D(t)(i). The "i (= 1,..., N(t))" represents a serial number of an object detected at time t. N(t) represents the total number of objects detected at time t.

The position prediction results at time t for all objects can be expressed by, for example, P(t)(j). The "j (= 1,..., M(t)) represents a serial number of the position predicted at time t. M(t) represents the total number of positions predicted at time t.

The IoU is a normalized quotient acquired by dividing an intersection area by an entire area in regard to two areas. Thus, as the value of the IoU is larger, the overlap between the two areas is larger, and as the value of the IoU is smaller, the overlap between the two areas is smaller. Hereinafter, the IoU is described with reference to FIG. 14.

FIG. 14 is an explanatory diagram relating to the IoU in the first arrangement. Part (a) of FIG. 14 illustrates an object detection position 1411 and an object prediction position 1421. Part (b) of FIG. 14 illustrates an intersection area 1431 in which the object detection position 1411 and object prediction position 1421 overlap. Part (c) of FIG. 14 illustrates an entire area 1432 of the object detection position 1411 and object prediction position 1421. For example, the correlating unit 260 calculates the IoU, based on the intersection area 1431 and the entire area 1432.

### (Step ST152)

The correlating unit 260 correlates the object detection positions and the object prediction positions, based on the combinations and the IoU. Specifically, by the Hungarian algorithm, with the value of the IoU being set as a cost, the correlating unit 260 correlates the object detection positions and the object prediction positions, from all combinations between the object detection results at time t and the position prediction results at time t.

### (Step ST153)

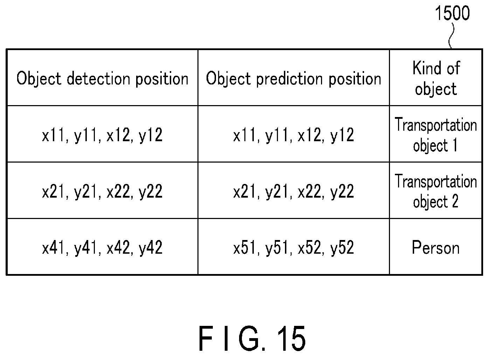

The correlating unit 260 generates a correlation result including information of a combination of correlated positions and information of uncorrelated positions. Hereinafter, the information of the combination of correlated positions is described with reference to FIG. 15.

FIG. 15 is a table 1500 exemplarily illustrating information of combinations of correlated positions in the first arrangement. The table 1500 correlates the object detection positions, the object prediction positions, and the kinds of object. Specifically, in the table 1500, an object detection position "x11, y11, x12, y12", an object prediction position "x11, y11, x12, y12", and the kind of object "transportation object 1" are correlated. In addition, an object detection position "x21, y21, x22, y22", an object prediction position "x21, y21, x22, y22", and the kind of object "transportation object 2" are correlated. Furthermore, an object detection position "x41, y41, x42, y42", an object prediction position "x51, y51, x52, y52", and the kind of object "person" are correlated.

The information of uncorrelated positions is considered to to be, for example, a case (1) where an object prediction position, which is correlated with an object detection position, is not present, or a case (2) where an object detection position, which is correlated with an object prediction position, is not present. In the case (1), it is assumed that a new person is walking in within a screen. In addition, in the case (2), it is assumed that occlusion occurs in regard to an object that is a detection target.

The information of the combination of correlated positions at time t can be expressed by, for example, C(t) = (D(t)(I(k)), P(t) (J(k))). The "k (= 1,..., L(t))" represents a serial number of the correlated combination at time t. L(t) represents the total number of correlated combinations at time t. I(k) represents a serial number of a detected object corresponding to k. J(k) represents a serial number of a predicted position corresponding to k.

The information of uncorrelated positions at time t can be expressed by, for example, NCD(t) = D(t)(i (= not in I(k))), in the case of the object detection result. The "i (= not in I(k))" represents a number not included in I(k), among the objects detected at time t, i.e., a number of an uncorrelated object.

In addition, for example, the information of the uncorrelated position at time t can be expressed by NCP(t) = P(t)(j (= not in J(k))), in the case of the position prediction result. The "j (= not in J(k))" represents a number not included in J(k), among the positions predicted at time t, i.e., a number of an uncorrelated position.

### (Step ST160)

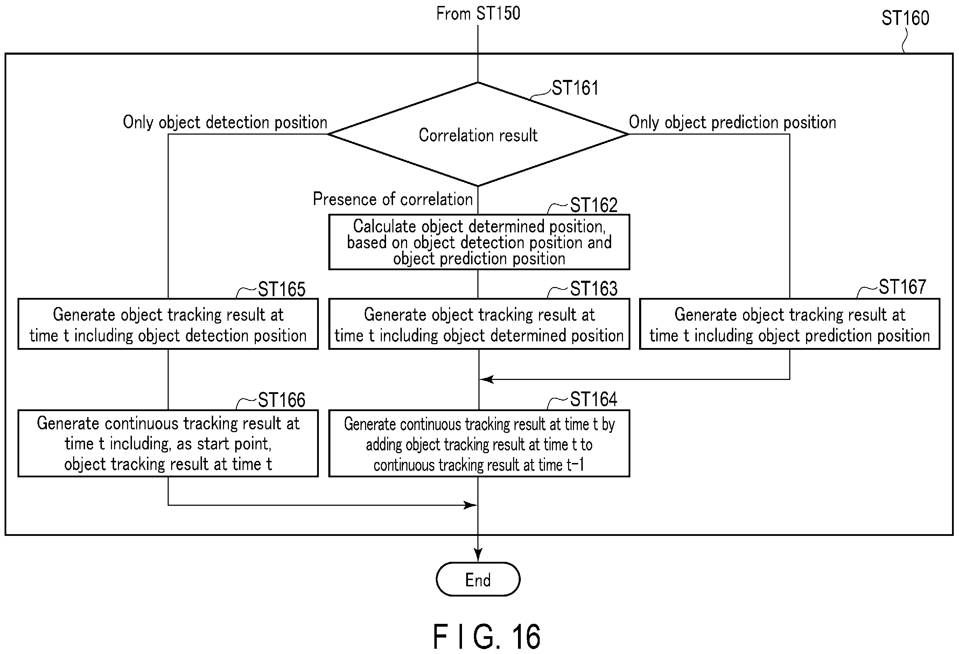

After the correlation result is generated, the tracking process unit 270 generates a continuous tracking result at time t, based on the correlation result. Hereinafter, the process of step ST160 is referred to as "continuous tracking result generating process". A concrete example of the continuous tracking result generating process is described below with reference to a flowchart of FIG. 16.

FIG. 16 is a flowchart illustrating a concrete example of the continuous tracking result generating process in FIG. 4. The flowchart of FIG. 16 is a flowchart for describing the details of the process of step ST160 of FIG. 4.

### (Step ST161)

After the correlation result is generated, the tracking process unit 270 determines the kind of the correlation result. If the correlation result is the information of the combination of correlated positions, the tracking process unit 270 determines "presence of correlation", and the process advances to step ST162. If the correlation result is the information of the uncorrelated position relating to the object detection result, the tracking process unit 270 determines "only object detection position", and the process advances to step ST165. If the correlation result is the information of the uncorrelated position relating to the position prediction result, the tracking process unit 270 determines "only object prediction position", and the process advances to step ST167.

### (Step ST162)

After determining "presence of correlation", the tracking process unit 270 calculates an object determined position, based on the object detection position and the object prediction position. Specifically, the tracking process unit 270 calculates the object determined position from the object detection position and the object prediction position, by using the method described in the above-mentioned reference document 2 or the like.

### (Step ST163)

The tracking process unit 270 generates an object tracking result at time t including the object determined position. The object tracking result at time t can be expressed as, for example, T(t) = (s(t), c), in regard to each of objects. The "s(t)" represents the object determined position (rectangular area) at time t.

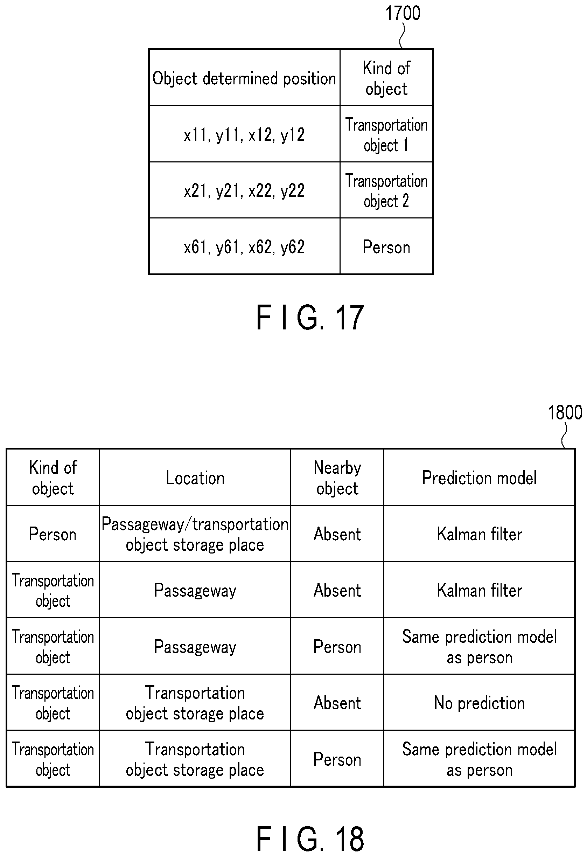

FIG. 17 is a table 1700 exemplarily illustrating the object tracking result at time t in the first arrangement. Specifically, in the table 1700, an object determined position "x11, y11, x12, y12" and the kind of object "transportation object 1" are correlated. In addition, an object determined position "x21, y21, x22, y22" and the kind of object "transportation object 2" are correlated. Furthermore, an object determined position "x61, y61, x62, y62" and the kind of object "person" are correlated.

As regards the transportation object 1, the object detection position at time t and the object prediction position at time t indicate the same rectangular area, and the object determined position is also the same rectangular area. The same applies to the transportation object 2. As regards the person, since the object detection position at time t and the object prediction position at time t indicate different rectangular areas, the object determined position is also a different rectangular area from those rectangular areas.

### (Step ST164)

The tracking process unit 270 generates a continuous tracking result at time t by adding the object tracking result at time t to the continuous tracking result at time t-1. The continuous tracking result at time t can be expressed as, for example, CT(t) = ({s(1),..., s(t-1), s(t)}, c), in regard to each of objects. After step ST164, the object tracking program is terminated.

### (Step ST165)

After "only object detection position" is determined, the tracking process unit 270 generates an object tracking result at time t including the object detection position. Specifically, the tracking process unit 270 generates the object tracking result at time t by substituting the object detection position for the object determined position. In step ST165, the object tracking result at time t can be expressed as, for example, T(t) = (d(t), c) = (s(t), c), in regard to each of objects.

### (Step ST166)

The tracking process unit 270 generates a continuous tracking result at time t including, as a start point, the object tracking result at time t. In step ST166, the continuous tracking result at time t can be expressed as, for example, CT(t) = ({s(t)}, c), in regard to each of objects. After step ST166, the object tracking program is terminated.

### (Step ST167)

After "only object prediction position" is determined, the tracking process unit 270 generates an object tracking result at time t including the object prediction position. Specifically, the tracking process unit 270 generates the object tracking result at time t by substituting the object prediction position for the object determined position. In step ST167, the object tracking result at time t can be expressed as, for example, T(t) = (p(t), c) = (s(t), c), in regard to each of objects. After step ST167, the process advances to step ST164.

Note that after step ST164 and step ST166, the time t may be incremented by 1, the process may return to step ST110, and a similar process may be repeated. In addition, the object tracking program may be terminated by an instruction by a user.

As been described above, the object tracking device according to the first arrangement acquires image data at a first time (for example, time t); detects a position and a kind of an object from the image data at the first time, thereby generating an object detection result at the first time in which the detected position and the detected kind of the object are correlated; selects a prediction model for predicting a position of the object at the first time, based on an object tracking result at a second time (for example, time t-1) preceding the first time, a position and a kind of the object determined at the second time being correlated in the object tracking result at the second time; predicts a position of the object at the first time, based on the selected prediction model and a time-series continuous tracking result including the object tracking result at the second time, thereby generating a position prediction result at the first time in which the predicted position and the kind of the object are correlated; generates a correlation result by executing correlation between the object detection result at the first time and the position prediction result at the first time; and generates an object tracking result at the first time, based on the correlation result.

Therefore, the object tracking device according to the first arrangement can improve the tracking accuracy of an object by selecting a prediction model at the present time, based on an object determined position at one preceding time to the present time.

### (Second Arrangement)

In the object tracking device according to the first arrangement, the prediction model is selected in accordance with the kind and location of the object. On the other hand, in an object tracking device according to a second arrangement, the prediction model is selected in accordance with the kind and location of the object, and a nearby object.

The object tracking device according to the second arrangement differs from the object tracking device according to the first arrangement with respect to the model database, the process in the prediction model selection unit 240, and the process in the object prediction unit 250. Hereinafter, different parts from the first arrangement are described.

In the second arrangement, the model DB 230 stores the kind of object, the location where the object is present, a nearby object, and the prediction model, in such a manner that these are correlated. The model DB outputs information of a prediction model that is correlated with the kind and location of the object, and the nearby object, in response to readout from the prediction model selection unit 240. Note that the model DB 230 may store a table in which the kind of object, the location, the nearby object and the prediction model are correlated. In addition, the information of the prediction model may be information indicating that prediction with use of the prediction model is not executed.

The information of the nearby object is, for example, information relating to another object that is approaching an object of interest. The nearby object is, for example, a person, and a case is assumed in which the person actively approaches an object at rest (for example, a transportation object). In this case, there is a possibility that the transportation object, which is usually at rest, is moved by the person.

FIG. 18 is a table 1800 exemplarily illustrating a model database in the second arrangement. The table 1800 correlates the kind of object, the location, the nearby object, and the prediction model. Specifically, in the table 1800, the kind of object "person", the location "passageway/transportation object storage place", the nearby object "absent", and the prediction model "Kalman filter" are correlated. In addition, the kind of object "transportation object", the location "passageway", the nearby object "absent", and the prediction model "Kalman filter" are correlated. Furthermore, the kind of object "transportation object", the location "passageway", the nearby object "person", and the prediction model "same prediction model as person" are correlated. Besides, the kind of object "transportation object", the location "transportation object storage place", the nearby object "absent", and the prediction model "no prediction" are correlated. In addition, the kind of object "transportation object", the location "transportation object storage place", the nearby object "person", and the prediction model "same prediction model as person" are correlated.

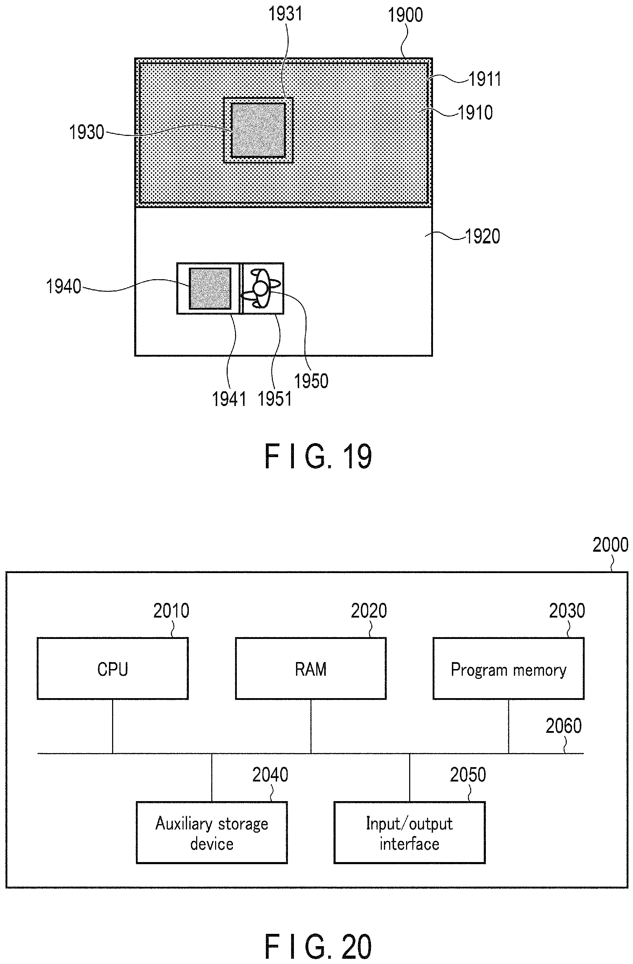

FIG. 19 is an explanatory diagram exemplarily illustrating a scene in which a person approaches a transportation object in the second arrangement. FIG. 19 illustrates image data 1900. In the image data 1900, a scene is illustrated in which a transportation object 1930 is disposed on a transportation object storage place 1910, a transportation object 1940 is disposed on a passageway 1920, and a person 1950 is working on the passageway 1920. In addition, FIG. 19 illustrates, on the image data 1900, a transportation object storage place area 1911 and three object determined positions 1931, 1941 and 1951.

The object tracking result relating to the image data 1900 includes, for example, the three object determined positions 1931, 1941 and 1951. The object determined position 1931 is a rectangular area substantially including the transportation object 1930. The object determined position 1941 is a rectangular area substantially including the transportation object 1940. The object determined position 1951 is a rectangular area substantially including the person 1950.

The object determined position 1941 and the object determined position 1951 overlap in a partial area. The overlap occurs because of the person 1950 approaching the transportation object 1940. A determination process of a nearby object is executed by, for example, the prediction model selection unit 240. Specifically, the prediction model selection unit 240 calculates an evaluation value by evaluating the overlap between the object determined position 1941 relating to the transportation object 1940 and the object determined position 1951 relating to the person 1950, and determines that the person 1950 is the nearby object, in a case where the evaluation value is equal to or greater than a threshold. Note that in a case where a plurality of persons approach the transportation object, the prediction model selection unit 240 may select the person with the greatest evaluation value. In addition, since there is a case where transportation objects are disposed in close proximity, the prediction model selection unit 240 may be configured to not recognize the transportation object as a nearby object.

Next, a process of the object prediction unit 250 in regard to the transportation object 1940 is described. As regards the transportation object 1940, if the prediction model "same prediction model as person" is selected in the prediction model selection unit 240, the object prediction unit 250 generates a position prediction result by setting the object prediction position, which is predicted based on the continuous tracking result relating to the person 1950, as the object prediction position relating to the transportation object 1940. By executing this process, even in a case where the transportation object 1940 is moved by the person 1950, the object tracking device 100 can accurately execute the position prediction relating to the transportation object 1940.

As has been described above, the object tracking device according to the second arrangement can select the prediction model in accordance with the kind of object, the location, and the nearby object. Hence, the object tracking device according to the second arrangement can execute position prediction by using an appropriate prediction model, even in a case where the object at rest, which is the tracking target, is passively moved.

Therefore, the object tracking device according to the second arrangement can improve the tracking accuracy of the object, like the object tracking device according to the first arrangement.

### (Hardware Configuration)

FIG. 20 is a block diagram exemplarily illustrating a hardware configuration of a computer according to an arrangement. A computer 2000 includes, as hardware, a CPU (Central Processing Unit) 2010, a RAM (Random Access Memory) 2020, a program memory 2030, an auxiliary storage device 2040, and an input/output interface 2050. The CPU 2010 communicates, via a bus 2060, with the RAM 2020, program memory 2030, auxiliary storage device 2040, and input/output interface 2050.

The CPU 2010 is an example of a general-purpose processor. The RAM 2020 is used by the CPU 2010 as a working memory. The RAM 2020 includes a volatile memory such as an SDR_AM (Synchronous Dynamic Random Access Memory). The program memory 2030 stores various programs including an object tracking program. As the program memory 2030, use is made of, for example, a ROM (Read-Only Memory), a part of the auxiliary storage device 2040, or a combination thereof. The auxiliary storage device 2040 non-transitory stores data. The auxiliary storage device 2040 includes a nonvolatile memory such as an HDD or an SSD.

The input/output interface 2050 is an interface for a connection to, or for communication with, another device. The input/output interface 2050 is used, for example, for a connection to, or for communication with, the output device 110 and photographing device 120 illustrated in FIG. 1. In addition, for example, the input/output interface 2050 may be used for a connection to, or for communication with, a storage device and an external device, which are not illustrated in FIG. 1.

Each of the programs stored in the program memory 2030 includes computer-executable instructions. If the program (computer-executable instructions) is executed by the CPU 2010, the program causes the CPU 2010 to execute a predetermined process. For example, if the object tracking program is executed by the CPU 2010, the object tracking program causes the CPU 2010 to execute a series of processes described in connection with the respective steps of FIGS. 4, 13 and 16.

The program may be provided to the computer 2000 in the state in which the program is stored in a computer-readable storage medium. In this case, for example, the computer 2000 further includes a drive (not illustrated) that reads data from the storage medium, and acquires the program from the storage medium. Examples of the storage medium include a magnetic disk, an optical disc (CD-ROM, CD-R, DVD-ROM, DVD-R, or the like), a magneto-optical disc (MO, or the like), and a semiconductor memory. In addition, the program may be stored in a server on a communication network, and the computer 2000 may download the program from the server by using the input/output interface 2050.

The processes described in the arrangements may be executed not only by a general-purpose hardware processor such as the CPU 2010 executing the programs, but may also be executed by a purpose-specific hardware processor such as an ASIC (Application Specific Integrated Circuit). The term "processing circuitry (processing unit)" includes at least one general-purpose hardware processor, at least one purpose-specific hardware processor, or a combination of at least one general-purpose hardware processor and at least one purpose-specific hardware processor. In the example illustrated in FIG. 20, the CPU 2010, RAM 2020 and program memory 2030 correspond to the processing circuitry.

Thus, according to each of the above arrangements, the tracking accuracy of an object can be improved.

While certain arrangements have been described, these arrangements have been presented by way of example only, and are not intended to limit the scope of the claims. Indeed, the computer-readable storage medium described herein may be embodied in a variety of other forms; furthermore, various omissions, substitutions and changes in the form of the arrangements described herein may be made.

## Claims

1. A computer-readable storage medium storing a program for causing a computer to execute processing comprising:
acquiring image data at a first time;
detecting a position and a kind of an object from the image data at the first time, thereby generating an object detection result at the first time in which the detected position and the detected kind of the object are correlated;
selecting a prediction model for predicting a position of the object at the first time, based on an object tracking result at a second time that precedes the first time, a position and a kind of the object determined at the second time being correlated in the object tracking result at the second time;
predicting a position of the object at the first time, based on the selected prediction model and a time-series continuous tracking result including the object tracking result at the second time, thereby generating a position prediction result at the first time in which the predicted position and the kind of the object are correlated;
generating a correlation result by executing correlation between the object detection result at the first time and the position prediction result at the first time; and
generating an object tracking result at the first time, based on the correlation result.

2. The computer-readable storage medium according to claim 1, further comprising selecting the prediction model, based on the object tracking result at the second time and a model database in which the kind of the object, a location where the object is present, and the prediction model are correlated.

3. The computer-readable storage medium according to claim 1, wherein the selected prediction model is a prediction using a Kalman filter.

4. The computer-readable storage medium according to claim 1, further comprising determining the object tracking result at the second time as the position prediction result at the first time, in a case where the selected prediction model indicates no prediction.

5. The computer-readable storage medium according to claim 1, further comprising calculating an evaluation value by evaluating an overlap in all combinations between the object detection results at the first time and the position prediction results at the first time, and generating the correlation result by executing allocation between the object detection results and the position prediction results by using the evaluation value.

6. The computer-readable storage medium according to claim 5, further comprising calculating the evaluation value by using at least one of an IoU (Intersection over Union) and a similarity of image features.

7. The computer-readable storage medium according to claim 5, further comprising generating the correlation result by executing the allocation by using a Hungarian algorithm.

8. The computer-readable storage medium according to claim 1, wherein the correlation result includes information of a combination of correlated positions, and information of an uncorrelated position.

9. The computer-readable storage medium according to claim 1, further comprising selecting the prediction model, based on the object tracking result at the second time and a model database in which the kind of the object, a location where the object is present, a nearby object, and the prediction model are correlated.

10. The computer-readable storage medium according to claim 9, further comprising:
selecting the same prediction model as the nearby object, in a case where the nearby object that is close to the object of the object tracking result at the second time is present; and
setting a predicted position relating to the nearby object as a predicted position relating to the object of the object tracking result at the second time.

11. An object tracking device comprising processing circuitry configured to:
acquire image data at a first time;
detect a position and a kind of an object from the image data at the first time, thereby generating an object detection result at the first time in which the detected position and the detected kind of the object are correlated;
select a prediction model for predicting a position of the object at the first time, based on an object tracking result at a second time that precedes the first time, a position and a kind of the object determined at the second time being correlated in the object tracking result at the second time;
predict a position of the object at the first time, based on the selected prediction model and a time-series continuous tracking result including the object tracking result at the second time, thereby generating a position prediction result at the first time in which the predicted position and the kind of the object are correlated;
generate a correlation result by executing correlation between the object detection result at the first time and the position prediction result at the first time; and
generate an object tracking result at the first time, based on the correlation result.

12. An object tracking method comprising:
acquiring image data at a first time;
detecting a position and a kind of an object from the image data at the first time, thereby generating an object detection result at the first time in which the detected position and the detected kind of the object are correlated;
selecting a prediction model for predicting a position of the object at the first time, based on an object tracking result at a second time that precedes the first time, a position and a kind of the object determined at the second time being correlated in the object tracking result at the second time;
predicting a position of the object at the first time, based on the selected prediction model and a time-series continuous tracking result including the object tracking result at the second time, thereby generating a position prediction result at the first time in which the predicted position and the kind of the object are correlated;
generating a correlation result by executing correlation between the object detection result at the first time and the position prediction result at the first time; and
generating an object tracking result at the first time, based on the correlation result.
